(19) Europäisches Patentamt
European Patent Office
Office européen des brevets

(11) **EP 2 672 715 A2**

(12) **EUROPEAN PATENT APPLICATION**

(43) Date of publication:
**11.12.2013 Bulletin 2013/50**

(51) Int Cl.:
***H04N 13/02*** (2006.01)

(21) Application number: **13171150.9**

(22) Date of filing: **07.06.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **07.06.2012 US 201261689486 P**

(71) Applicant: Liberty Reach Inc.
**Clearwater, Idaho 83552 (US)**

(72) Inventors:
• **Bartos, Gary William**
**Somerville, MA Massachusetts 02144 (US)**
• **Haven, G. Neil**
**Clearwater, ID Idaho 83552 (US)**

(74) Representative: **Korenberg, Alexander Tal**
**Kilburn & Strode LLP**
**Electronics**
**20 Red Lion Street**
**London WC1R 4PJ (GB)**

(54) **3-D imaging and processing system including at least one 3-D or depth sensor which is continually calibrated during use**

(57)    3D imaging and processing method and system including at least one 3D or depth sensor which is continuously calibrated during use are provided. In one embodiment, a calibration apparatus or object is continuously visible in the field of view of each 3D sensor. In another embodiment, such as a calibration apparatus is not needed. Continuously calibrated 3D sensors improve the accuracy and reliability of depth measurements. The calibration system and method can be used to ensure the accuracy of measurements using any of a variety of 3D sensor technologies. To reduce the cost of implementation, the invention can be used with inexpensive, consumer-grade 3D sensors to correct measurement errors and other measurement deviations from the true location and orientation of an object in 3D space.

FIG. 8

**Description**

CROSS-REFERENCE TO RELATED APPLICATIONS

This application claims the benefit of U.S. provisional application entitled "Method and Apparatus for Continuous Calibration of 3D Sensors" having Application No. 61/689,486 filed June 7, 2012, the specification of which is incorporated herein as an Appendix.

TECHNICAL FIELD

1. Field of the Invention

The present invention generally pertains to 3-D imaging and processing methods and systems, and, in particular to such methods and systems wherein one or more 3-D sensors need to be calibrated to maintain accuracy of the sensors over time.

BACKGROUND

Devices that generate two-dimensional digital images representative of visible scenes are well known in the prior art (see, for example, US Pat. 4,131,919). Each picture element (or 'pixel') in these two-dimensional digital images is designated by its horizontal and vertical coordinates within a two-dimensional imaging array. Each pixel is associated with a single intensity value (a 'grayscale' value) in a black and white image (see, for example, US Pat. 4,085,456), or with multiple intensity values (often: red, green, and blue) in color images (see, for example, US Pat. 3,971,065). Sensors configured to provide such two-dimensional digital image representations, in which horizontal and vertical coordinates are associated with intensity values, are commonly termed '2D sensors.'

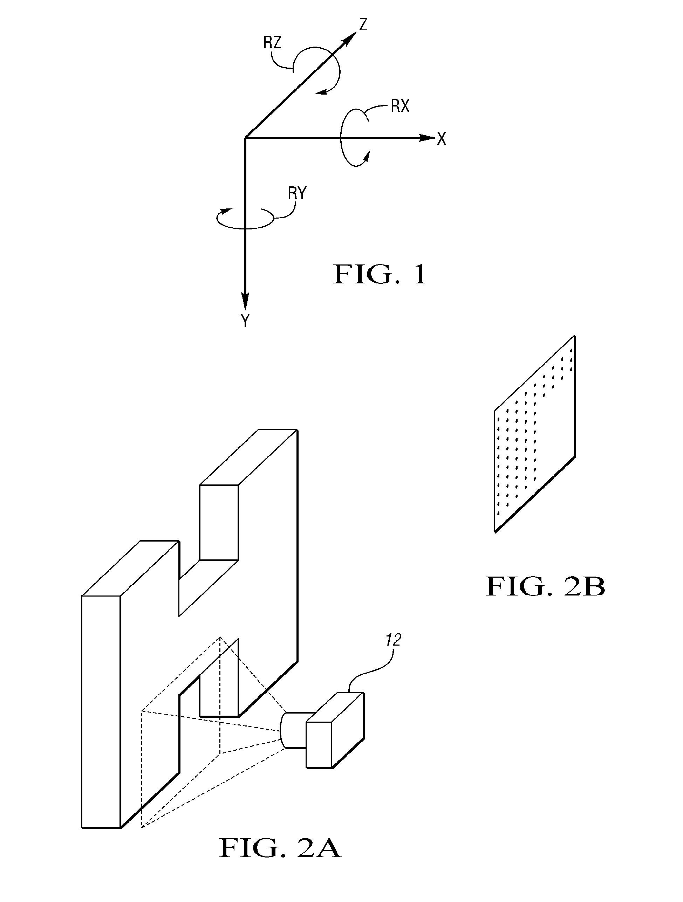

In traditional two-dimensional (2D) image coordinates, the image origin (0,0) is located in the upper left corner of the image, the +X (horizontal) axis points to the right, and +Y (vertical) axis points down. For a right-handed 3D coordinate system with a +Z (range) axis mutually perpendicular to the +X and +Y axes, the +Z axis points away from the 3D sensor and into the scene (into the page) as shown in Fig. 1. The disposition of an object can be described in terms of (X, Y, Z) points in this three-dimensional space.

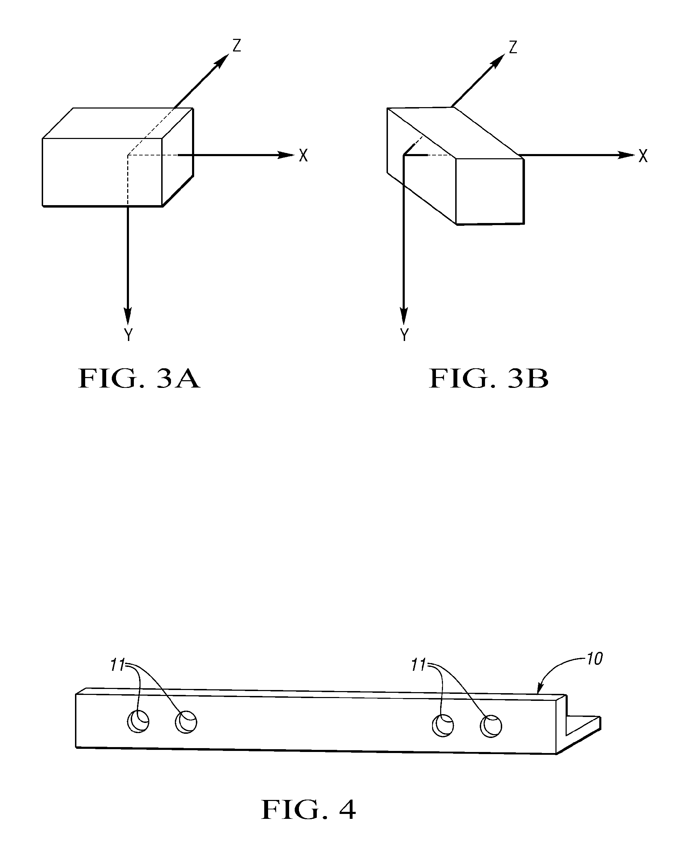

The pose of an object is the position and orientation of the object in space relative to some reference position and orientation. The location of the object can be expressed in terms of X, Y, and Z. The orientation of an object can be expressed in terms of Euler angles describing its rotation about the x-axis (hereafter RX), rotation about the y-axis (hereafter RY), and then rotation about the z-axis (hereafter RZ) relative to a starting orientation. Fig. 3A shows an object in a starting pose, and Fig. 3B shows the same object in a new pose after a Z translation and RY rotation. There are many equivalent mathematical coordinate systems for designating the pose of an object: position coordinates might be expressed in spherical coordinates rather than in Cartesian coordinates of three mutually perpendicular axes; rotational coordinates may be expressed in terms of Quaternions rather than Euler angles; 4x4 homogeneous matrices may be used to combine position and rotation representations; etc. But generally six variables X, Y, Z, RX, RY, and RZ are sufficient to describe the pose of a rigid object in 3D space.

The pose of an object can be estimated using a sensor capable of measuring range (depth) data. Location of the object relative to the sensor can be determined from one or more range measurements. Orientation of the object can be determined if the sensor provides multiple range measurements for points on the object. Preferably a dense cloud of range measurements are provided by the sensor so that orientation of the object can be determined accurately.

Devices for the calculation of a limited set of range data from an electronic representation of a visible scene are also well known in the prior art. Typically, these devices employ a 2D sensor and one or more beams of radiation configured so that the beams of radiation intersect an object in the field of view of the 2D sensor, and some radiation from those beams is reflected by that object back to the 2D sensor. The mathematics of triangulation is used to calculate the range to the object for those pixels illuminated by the beam(s) of radiation (see, for example, U.S. Pats. 3,180,205 and 4,373,804). Using terms of the art: a picture element (designated by its horizontal and vertical coordinates within an imaging array) for which range data is known is termed a volume element or "voxel."

Techniques similar to those disclosed in U.S. Pats. 3,180,205 and 4,373,804 generate a relatively small set of range data. This limitation was overcome by the invention of three-dimensional sensors which produce range data for all, or nearly all, picture elements in their imaging arrays, and hence much more complete range data for objects in their fields of view. See, for example, U.S. Patent 4,195,221, which utilizes time of flight techniques, U.S. Patent 5,081,530 which utilizes scanning beam techniques, or U.S. Patent 6,751,344 which utilizes projected patterns to obtain voxels over an extended field of view.

In recent years, the ideas in these early patents have been developed further so that relatively inexpensive consumer-grade 3D sensors are available commercially. For example, a 3D sensor based on the time of flight principle is the DepthSense DS325 (http://www.softkinetic.com). A 3D sensor that derives depth from projected structured light is the PrimeSense Carmine (http://www.primesense.com/solutions/sensor/). A 3D sensor that utilizes a scanning beam technique is the LMI Gocator (http://www.lmi3d.com).

Some consumer-grade 3D sensors are hybrid sensors capable of associating each picture element, designated by its (two-dimensional) horizontal and vertical coordinates, with intensity information as well as (three-dimensional) range information. The DepthSense DS325 and PrimeSense Carmine are hybrid sensors of this type. In the terms of the art, a data structure comprised of horizontal, vertical, and range coordinates is known as a 'point cloud,' and the voxels within the point cloud provide information about the range and relative brightness of objects that reflect the radiation emitted by the sensor. Although the term 'depth image' may also be used to describe the data output by a 3D sensor, since the hybrid 3D sensors output brightness of color data in addition to depth data, the output of depth-only 3D sensors as well as hybrid 3D sensors will be termed "point clouds". A voxel in a point cloud could be an $(X,Y,Z,I)$ element with horizontal, vertical, depth, and monochromatic intensity, or the voxel could be an $(X,Y,Z,R,G,B)$ element with horizontal, vertical, depth, red, green, and blue intensities, or the voxel could represent some other combination of $(X, Y, Z, ...)$ values and additional magnitudes. For instance, the data from the DepthSense DS325 may indicate the distance from an object to a given picture element as well as the color of the object surface at that same picture element position.

Fig. 2A shows a portion of an H-shaped object that lies within the field of view of a 3D sensor 12. The 3D sensor will produce a point cloud consisting of $(X, Y, Z, ...)$ voxels for a portion of the object surface, as shown in Fig. 2B. Interior points of the workpiece and points on the far side of the workpiece are not visible to the 3D sensor. A plurality of 3D sensors with non-overlapping or partially overlapping fields of view can be used in concert to acquire point clouds of multiple portions of the surface of the workpiece.

The accuracy of the voxel measurements from a 3D sensor is limited by no fewer than five factors: the effective resolution of the 3D sensor, the accuracy to which the 3D sensor may be calibrated, the intrinsic measurement drift of the 3D sensor, sensitivity to changes in ambient conditions, and the position stability of the 3D sensor. Expensive industrial-grade 3D sensors (for example, see the Leica HDS6200 http://hds.leica-geosystems.com/en/) will typically have greater effective resolution and calibrated accuracy than inexpensive consumer grade 3D sensors. Such industrial-grade 3D sensors also typically exhibit less measurement drift. Unfortunately, such industrial-grade 3D sensors are priced at 100 to 1,000 times the cost of consumer-grade 3D sensors. Although the effective resolution and calibration accuracy of consumer-grade 3D sensors is sufficient for many industrial applications, these consumer-grade 3D sensors generally exhibit a magnitude of measurement drift that renders them inappropriate for industrial use. Nonetheless, given the low unit cost of recent consumer-grade sensors in comparison with industrial-grade 3D sensors, it is desirable to overcome this limitation.

In the prior art, calibration of 3D sensors that rely on the triangulation principle to measure depth requires the use of dimensionally stable plates flat to a thousandth of an inch (see U.S. Patent 4,682,894). Calibration of the 3D sensor at several depths requires movement of the plate relative to the 3D sensor, or movement of the 3D sensor relative to the plate. Such 3D calibration must be performed under precisely controlled conditions in the sensor manufacturing facility. For many applications it would not be practical or perhaps even feasible to repeat this calibration process once the 3D sensor has been deployed in the field.

In a later development, calibration of a 3D sensor and correction of its alignment can be carried out periodically in the field, but this periodic calibration depends on the use of devices and special fixtures that require considerable labor to install and employ (see U.S. Patent Publication 2001/0021898 A1). More recent developments in the prior art improve periodic calibration by requiring a new calibration if measurements fall outside a tolerance range. However, even this method of calibration requires the use of devices and typical fixtures that are temporarily moved into the field of view of the 3D sensor for the purpose of calibration, and these devices must be removed again before 3D measurement continues (see U.S. Patent 6,615,112).

Periodic electronic calibration and realignment of a 3D sensor can reduce measurement error, but the magnitude of measurement error may not be detected until the calibration is performed. If a periodic calibration reveals that the sensor's measurement accuracy is no longer within an acceptable range, it may be difficult or even impossible to determine when the misalignment occurred, and whether the misalignment occurred gradually or abruptly. An inaccurate measurement could also by chance fall within a permitted tolerance range. Periodic calibration will typically not correct for measurement drift or gradual misalignment of the sensor.

Other U.S. patents related to at least one aspect of the present invention include: 3,854,822; 4,753,569; 5,131,754; 5,715,166; 6,044,183; 8,150,142; and 8,400,494.

SUMMARY

It is the object of at least one embodiment of the present invention to address the disadvantages of prior art, and, in particular, to improve accuracy, to reduce the cost of implementation, and to simplify the use and maintenance of a system deploying one or more 3D sensors. In keeping with these goals and other goals which will become apparent in the description of the embodiments of the present invention, the inventive characteristics of the method and apparatus include a simple manufacturing process for the calibration apparatus as well as a means to correct point cloud data from 3D sensors and hence improve the accuracy of the sensors.

It is one object of at least one embodiment of the present invention to supply an inexpensive apparatus and method for correcting the measurement drift of consumer-grade 3D sensors via continuous, real-time calibration of the sensor.

It is a further advantage of at least one aspect of the present invention that the apparatus and method for correcting the measurement drift of a 3D sensor herein described enables the automated detection of position instabilities in the mounting of the 3D sensor. The position of the mounted 3D sensor can be affected by slippage or warping due to gravity, changes in temperature, mechanical fatigue, or unintentional collisions with other objects. Accuracy of range measurements is further ensured by immediate detection of any such positional changes.

In carrying out the above objects and other objects of the present invention a 3-D imaging and processing method including at least one 3-D or depth sensor which is continuously calibrated during use is provided. The method includes supporting at least one 3-D object to be imaged at an imaging station, projecting a beam of radiation at a surface of each supported object and supporting at least one 3-D or depth sensor at the imaging station. Each sensor has a field of view so that each object is in each field of view. Each sensor includes a set of radiation sensing elements which detect radiation of the projected beam which is reflected from the surface of each object at the imaging station to obtain image data including depth measurements of a set of points in 3-D space corresponding to surface points of each object. The method further includes processing the depth measurements in real-time to obtain current depth calibration data and processing the image data and the current depth calibration data to obtain a real-time calibrated image.

The at least one object may include a calibration object having a fixed size and shape and supported in the field of view of each sensor. A subset of the radiation sensing elements detects radiation reflected from the calibration object. The depth measurements include depth measurements of a subset of points corresponding to surface points of the calibration object.

The method may further include storing sensor calibration data wherein the step of processing includes the step of calculating a difference between the current depth calibration data and the stored sensor calibration data to obtain at least one deviation. Six deviations may be calculated.

The step of processing may process the depth measurements and the at least one deviation to obtain a corrected pose of the at least one object at the imaging station.

The corrected pose may be in a first coordinate system wherein the method may include transforming the corrected pose to a second coordinate system different from the first coordinate system.

The radiation may include coherent light.

Further in carrying out the above objects and other objects of at least one embodiment of the present invention, a 3-D imaging and processing system for imaging at least one 3-D object at an imaging station is provided. Each object is illuminated with a projected beam of radiation. The system includes at least one 3-D or depth sensor located at the imaging station. Each sensor has a field of view so that each object is in each field of view. Each sensor includes a set of radiation sensing elements which detect radiation of the projected beam which is reflected from the surface of each object at the imaging station to obtain image data including depth measurements of a set of points in 3-D space corresponding to surface points of each object. At least one processor processes the depth measurements in real-time to obtain current depth calibration data and processes the image data and the current depth calibration data to obtain a real-time calibrated image.

The at least one object may include at least one calibration object. Each calibration object has a fixed size and shape and is supported in the field of view of each sensor. A subset of the radiation sensing elements may detect radiation reflected from each calibration object wherein the depth measurements include depth measurements of a subset of points corresponding to surface points of each calibration object.

The system may further include an electronic storage device to store sensor calibration data wherein the at least one processor calculates a difference between the current depth calibration data and the stored sensor calibration data to obtain at least one deviation.

The at least one processor processes the depth measurements and the at least one deviation to obtain a corrected pose.

The radiation may include coherent light.

The system may further include a projector to project the beam of radiation.

The projector may be a laser plane projector which includes a coherent light source. Each calibration object may include a plurality of spaced-apart optical fiducials illuminated with the projected beam. Each of the optical fiducials has a precisely known location relative to each other optical fiducial.

Each of the optical fiducials may have an optically detectable shape.

Embodiments of the present invention allow calibration of 3D sensors to take place continuously. The point clouds output by one or more 3D sensors are corrected in real time, and the correction can be carried on indefinitely, ensuring accuracy for the lifetime of use of the 3D sensors. The calibration apparatus remains fixed in place and is visible at all times to all 3D sensors. The continuous presence of the calibration apparatus in the fields of view of all 3D sensors makes it possible to correct depth information continuously, and also obviates the need to move a calibration apparatus into and out of the work envelope for periodic calibration, as is common in the prior art.

At least one embodiment of the present invention improves upon the state of the art by providing continuous calibration for 3D sensors. Continuous calibration ensures the accuracy of every measurement, in real time, thus eliminating the need for periodic calibration either on a maintenance schedule or in response to some triggering event. The continuous calibration of the present invention can also be termed continuous drift correction since it corrects for intrinsic measurement drift of the sensor and maintains the accuracy of an initial calibration as long as the sensor continues to operate. In addition, continuous calibration makes it possible to check the positional stability of the sensor and compensate for other extrinsic factors that affect the accuracy of depth measurement. Use of at least one embodiment of the present invention improves the accuracy of depth measurement for every picture element in the imaging array, and every voxel in the point cloud with range information. Improvement in the measurement accuracy of each voxel allows for more accurate measurement of an object subtending multiple picture elements in the imaging array.

Unlike depth measurement systems that rely on robotic arms or other mechanical means to move 3D sensors or calibration targets into temporary positions for calibration, one preferred embodiment of the invention does not have moving parts that can compromise the safety of workers who may occupy the work cell. The 3D sensors, calibration apparatus, and computer work station can remain rigidly fixtured and immovable.

Full disclosure of the present invention will make it obvious how continuous calibration using the method and apparatus described herein makes it possible to achieve long-term depth measurement accuracy for 3D sensors, including inexpensive consumer-grade sensors such as the PrimeSense Carmine. The method and apparatus provide for the means to correct measurement error for all six degrees of freedom (X, Y, Z, RX, RY, RZ) of an object in the field of view of a 3D sensor.

Alternative embodiments of the present invention increase the reliability of the measurements from a 3D sensor by also enabling the detection of position instabilities in the mechanical mounting of a 3D sensor.

The invention will be described with reference to a specific embodiment illustrated in the appended figures, but it is to be understood that the drawings of the preferred embodiment are intended as a description only, and that the specifics of the drawings and the specifics of the embodiment are not intended as limitations.

BRIEF DESCRIPTION OF THE DRAWINGS

Fig. 1 is the right-handed coordinate system XYZ of a 3D sensor with rotations RX, RY, and RZ about each axis; Fig. 1 corresponds to Figure 1 of the provisional application;

Figs. 2A and 2B show an object in an initial pose and then the same object in a new pose after a Z translation and an RY rotation; Figures 2A and 2B correspond to Figures 3A and 3B of the provisional application;

Figs. 3A and 3B show an object in view of a 3D camera and the cloud of (X, Y, Z) points on the object surface visible to the 3D sensor; Figures 3A and 3B correspond to Figures 2a and 2b of the provisional application;

Fig. 4 is a perspective view of an embodiment of a calibration object or apparatus; Figure 4 corresponds to Figure 10 of the provisional application;

Fig. 5A and 5B and 5C show how Z, RX, and RY can be determined from different poses of a flat plane; Figures 5A, 5B and 5C correspond to Figures 13a, 13b and 13c, respectively, of the provisional application;

Fig. 6A and 6B and 6C show how X, Y, and RZ can be determined from different orientations and positions of two fiducial marks; Figures 6A, 6B and 6C correspond to Figures 14a, 14b and 14c, respectively of the provisional application;

Fig. 7 is an illustration of a work cell or image station in which both the calibration apparatus and an auto body shell are in view of a plurality of 3D sensors; Figure 7 corresponds to Figure 16 of the provisional application; and

Fig. 8 shows an object in view of a 3D sensor, a laser light projector, and an intersection of the projected laser light plane and object that lies within the field of view of the 3D sensor.

DESCRIPTION OF THE PREFERRED EMBODIMENTS

As required, detailed embodiments of the present invention are disclosed herein; however, it is to be understood that the disclosed embodiments are merely exemplary of the invention that may be embodied in various and alternative forms. The figures are not necessarily to scale; some features may be exaggerated or minimized to show details of particular components. Therefore, specific structural and functional details disclosed herein are not to be interpreted as limiting, but merely as a representative basis for teaching one skilled in the art to variously employ the present invention.

In one preferred embodiment, the calibration apparatus is a flat, rigid, dimensionally stable bar oriented in space so that the flat surface of the bar is presented to a single 3D sensor. The apparatus is configured to subtend a number of voxels of the sensor's field of view, without obscuring the field of view entirely. This set of subtended voxels is deemed the 'calibration set' of voxels.

The surface finish of the calibration apparatus appears matte under visible and near-infrared light, ensuring that sufficient radiation emitted by 3D sensors is reflected back to yield a valid depth measurement. The surface of the calibration apparatus may be tooled, painted, or otherwise ground roughly to ensure that the surface remains matte.

Depending on the symmetries of construction of the rigid bar, the data obtained from the calibration set of voxels may not be sufficient to determine the pose of the calibration apparatus with a full six degrees of freedom. For instance, if the rigid bar is flat, featureless, and oriented perpendicular to the line of sight of the 3D sensor, the calibration set of voxels will not permit calculation of the position of the calibration apparatus in a direction along the axis of the rigid bar. In a modification of the preferred embodiment, the calibration apparatus is a rigid bar configured with distinguishing features sufficient to determine the position and orientation of the calibration apparatus in six degrees of freedom. Said distinguishing features may be any physical features of the rigid bar sufficient to break the symmetry of the bar. The distinguishing features may be manufactured as through holes, countersunk holes, pegs, or other features that are detectable using depth data or other sensor data.

In the preferred embodiment, all distinguishing features are fiducial holes drilled completely through the flat plate facing all the 3D sensors, all holes have the same diameter, the holes are centered vertically on the center line of the flat plate, there is a pair of holes in the field of view of each 3D sensor, and the centers of each pair of holes are the same distance apart. For a single sensor, only two fiducial holes would be drilled through the rigid bar. In the preferred embodiment as shown in Figure 4, the fiducial holes 11 are circular holes drilled through the flat surface of the apparatus facing the 3D sensors. The size and separation of the fiducials are selected to fit the field of view of each 3D sensor according to the requirements of the application. In one preferred embodiment, the holes are 25 millimeters in diameter and pairs of holes have a center-to-center separation of 100 millimeters.

Figure 4 shows a typical embodiment of the calibration object or apparatus as a long straight L-shaped steel bar 10 with a pair of fiducial markings visible to each 3D sensor. Although the calibration apparatus may be mounted to brackets, and these brackets may be welded or otherwise permanently affixed to a floor or to some rigid structure, the single piece L-shaped configuration for the calibration apparatus is simple to manufacture, and the bottom surface affords a choice of method to affix the apparatus directly, permanently, and immovably to the floor or other supporting structure without the use of brackets. The calibration apparatus is affixed and the thickness of the calibration apparatus is selected so that gravitational pull, minor collisions, and forces applied to any portion of the surface do not cause the apparatus to move, twist, or distort significantly from its desired shape.

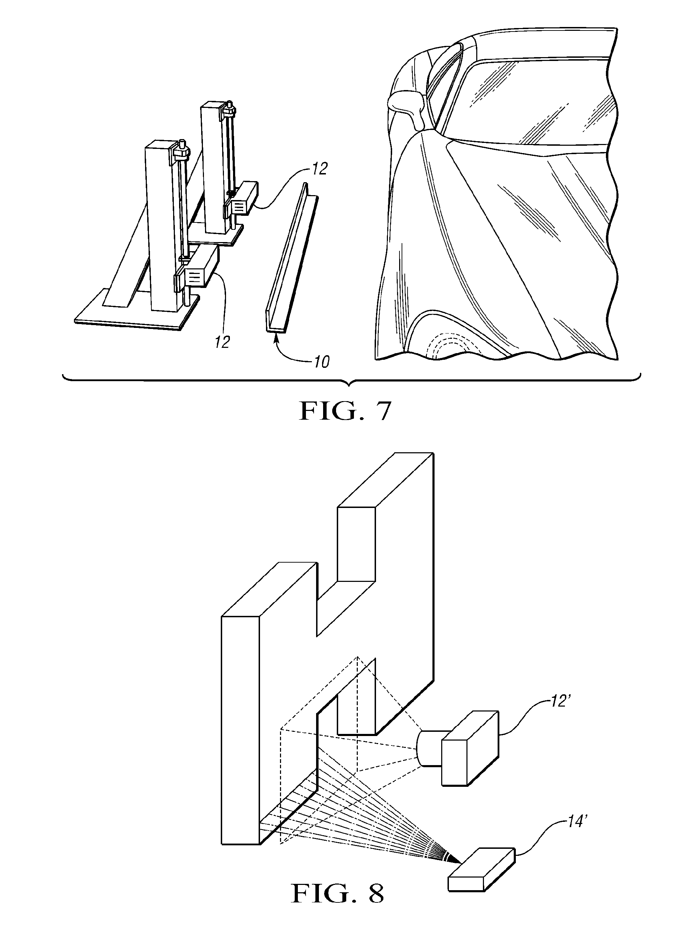

The calibration apparatus 10 may be several meters in length or longer and span the fields of view or two or more 3D sensors 12 as illustrated in Figure 7. For applications that require the measurement of smaller objects that measure no longer than a meter in any dimension, a single 3D sensor and a calibration apparatus one meter long may be sufficient. An installation may utilize multiple 3D sensors, each configured with its own calibration apparatus, or a single apparatus may span the fields of view of all 3D sensors.

At the time of initial setup of the 3D sensors, a reference point cloud is obtained from the 3D sensor.

Said reference point cloud may be stored for later access. Alternatively, the reference point cloud may first be analyzed according to one or more of the pose analysis methods hereinbelow, and only the results of the analysis may be stored for later access.

Subsequent to the initial setup of the 3D sensor, the depth data in point clouds generated by the 3D sensor will be affected by measurement drift. The data within these subsequent point clouds may also reflect the effect of a sensor being bumped out of its initial alignment.

Pose analysis methods well known in the prior art are used to analyze the "calibration set of voxels" from the reference point cloud and from subsequent point clouds. These methods yield a measurement of pose of the calibration apparatus or some portion of the calibration apparatus in the coordinate frame of the 3D sensor, and so each point cloud generated by the sensor can be compared to the reference point cloud.

Quantitative comparison of the reference pose and subsequent poses enables at least one embodiment of the present invention to calculate an error signal that is used to correct sensor measurement drift for the entirety of subsequent point clouds. In certain configurations of the present invention, the error signal may also be used to detect when a sensor has been bumped out of position.

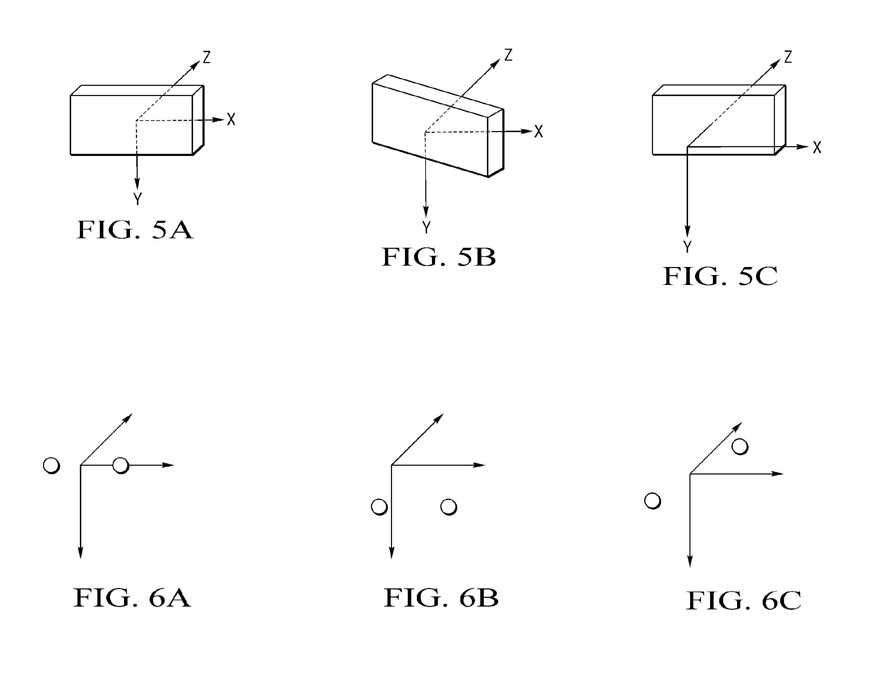

Depending on the requirements of the installation, the pose of the calibration apparatus may be determined in all six degrees of freedom or a partial description of pose may be determined in fewer degrees of freedom. For instance, simply averaging the Z-values from a portion of the calibration apparatus gives a reference value for one degree of freedom: Z, the range from the 3D sensor to the calibration apparatus. Alternatively, a planar fit to the data for the flat surface of the calibration apparatus provides a partial pose description in three degrees of freedom, namely reference values for Z, RX, and RY as illustrated in Figs. 5A, 5B, and 5C.

Identification and positional measurement of the two fiducial features on the calibration apparatus in view of each 3D sensor yield reference values for X, Y, and RZ as illustrated in Figs. 6A, 6B, and 6C. As is familiar to practitioners of the art of image processing, fiducial features such as holes or circular marks can be identified by methods that identify circles, match a reference shape to a feature in an image or point cloud, or by any of several other methods that will find the location of a feature in an image. Combined with the Z, RX, and RY values calculated from a planar fit as illustrated in Figs. 5A, 5B, and 5C, the measurement of fiducial locations suffices to calculate the pose of the calibration apparatus in all six degrees of freedom. Alternative configurations of the calibration apparatus and alternative methods for calculating the pose data will readily suggest themselves to practitioners skilled in the arts of object pose detection.

The controlling software uses the error signal to correct for the measurement drift of each 3D sensor. Depending on the drift characteristics of the particular sensor, the controlling software may employ any one of a variety of algorithms to perform drift correction. For instance, if the magnitude of sensor drift is known to be constant for all voxels in the point cloud over the measurement range of the sensor, then the error signal for the Z measurement can be obtained by subtracting the Z-value from the planar fit to the calibration set of voxels for a subsequent point cloud from the Z-value from the planar fit to the calibration set of voxels from the reference point cloud. This error signal is used to correct the Z-values from the voxels in the subsequent image by simply adding the error signal to the Z-values from the voxels in the subsequent image. Alternatively, the magnitude of the sensor drift may have a functional form dependent upon the Z-value itself. For example, drift magnitudes for some sensors are proportional to the Z depth value of the voxel, or even to the square of the Z depth value of the voxel, in which case a Z-value drift correction is applied to each voxel of the subsequent image depending on the Z-value of the voxel and the value of the error signal. Alternatively, if the magnitude of the sensor drift in a given sensor column has a functional form dependent upon the Z-value itself and the column number of the voxel, a Z-value correction may be applied to each voxel of the subsequent image depending on the Z-value of the voxel, the error signal, the column number of the voxel.

At least one embodiment of the invention may be further configured to compare the magnitude of the error signal and the magnitude of the typical range of measurement drift characteristic of the 3D sensor. If the magnitude of the error signal is within the range of intrinsic measurement drift characteristic of the 3D sensor, then the controlling software uses the error signal to correct the point cloud measurements for said intrinsic drift. If the magnitude of this error signal is greater than the intrinsic drift of the 3D sensor, the controlling software concludes that the 3D sensor has been moved from its installed position, and so generates a notification to the user. The system may also be prevented from making measurements until the user corrects the misalignment of the sensor.

The use of an error threshold value of at least one embodiment of the present invention differs from the use of a measurement threshold value in the prior art. In the prior art, a system with 3D sensors may initiate a calibration sequence if measurement values exceed the expected range. However, if calibration is triggered only periodically, then measurement error may increase gradually over time until measurements finally exceed the threshold value. For at least one embodiment of the present invention, error correction is applied to every subsequent point cloud, all measurements are corrected using continuous calibration, and the threshold merely sets a limit to the acceptable magnitude of error correction. At least one embodiment of the present invention makes accurate, calibrated measurements using limited error correction, or it makes no measurement at all.

In an alternative embodiment of Figure 8, a laser plane projector 14' is placed at a known position and orientation relative to a 3D sensor 12'. The laser projector is aimed so that the laser light intersects a portion of the field of view of the 3D sensor. A hybrid 3D sensor that combines both range data and brightness data can detect the reflected laser light in the brightness data of the point cloud. The voxels in the point cloud corresponding to the reflected laser light determine a calibration set of voxels. Within the "calibration set of voxels" there are two measurements of Z values: first, reference Z values can be measured for the voxels of reflected laser light using the well-known mathematics of triangulation; second, Z values in the point cloud can be read from the range data of the 3D sensor.

Sensor drift compensation in the alternative embodiment is achieved using the methods applied to the previously disclosed apparatuses.

An enhancement to the alternative embodiment involves configuring two or more laser plane projectors.

A computer workstation that receives point clouds from each 3D sensor includes one or more processors which calculate the deviations independently for each 3D sensor. Although the invention might be embodied such that one computer workstation is dedicated to each 3D sensor, or so that a mobile compute device is connected to the 3D sensors and performs operations on the point clouds, in the preferred embodiment a single computer workstation receives the data from a plurality of 3D sensors, and this single computer workstation calculates the deviations for each 3D sensor and applies corrections to the data from all 3D sensors.

Although the preferred embodiment enables the application of inexpensive consumer-grade 3D sensors to new industrial contexts, the calibration apparatus and method could be used with any 3D sensors that produce point clouds or that can make depth measurements at multiple points in a scene.

Aside from the embodiments of the invention that have been described, it is obvious that many additional embodiments could be created via modification or adaptation without departing from the spirit of the present invention or the scope of the following claims. The present invention is so completely revealed and additional advantages so obvious to others skilled in the arts of machine vision, 3D non-contact depth sensors, robot calibration, or related fields that the invention could be easily adapted for a variety of applications.

## SUMMARY OF PREVIOUSLY DISCLOSED EXAMPLE EMBODIMENTS

A method and system to continuously calibrate one or more 3D sensors are provided in one embodiment. An apparatus of fixed geometric shape continuously in view of each 3D sensor is provided. A computer workstation or computer device that receives point clouds from the 3D sensor is provided. A method of calculating the range deviation of the current pose of the apparatus, or one or more portions of the apparatus, measured by each 3D sensor, relative to the reference pose of the apparatus, or one or more portions of the apparatus is provided. A method of applying the calculated range deviation to correct for measurement drift for each 3D sensor is also provided.

The geometric shape may be configured with distinguishing features sufficient to determine the complete pose of the geometric shape in six degrees of freedom.

The portion of the apparatus in view of each 3D sensor may be substantially a planar surface.

The planar surface may be configured with distinguishing features sufficient to determine the complete pose of the planar surface in six degrees of freedom.

The distinguishing features may be holes drilled completely through the flat planar surface of the calibration apparatus that faces each of the 3D sensors.

The distinguishing features may be pegs, countersunk holes that do not penetrate completely through the calibration apparatus, or some other shape detectable using depth, color, and/or intensity information.

The step of calculating the deviation of the current pose of the apparatus relative to the reference pose of the apparatus may comprise calculating the first average range of the apparatus in the current pose, calculating the second average range of the apparatus in the reference pose and then subtracting the first from the second values. The step of calculating the range deviation of the current pose of the apparatus relative to the reference pose of the apparatus may comprise fitting a first plane to the surface of the apparatus in the current pose, calculating a first distance from the sensor to the first fit plane, fitting a second plane to the surface of the apparatus in the reference pose, calculating a second distance from the sensor to the second fit plane, and then subtracting the first distance from the second distance.

The step of calculating the range deviation of the current pose of one or more portions of the apparatus relative to the reference pose of one or more portions of the apparatus may comprise calculating the first average range to each of the columns of the apparatus in the current pose, calculating the second average range to each of the columns of the apparatus in the reference pose and then subtracting the first from the second value for each column individually.

The step of calculating the range deviation of the current pose of one or more portions of the apparatus relative to the reference pose of one or more portions of the apparatus may comprise calculating the first median range to each of the columns of the apparatus in the current pose, calculating the second median range to each of the columns of the apparatus in the reference pose and then subtracting the first from the second value for each column individually. The step of applying the calculated deviation to correct for measurement drift for each 3D sensor may comprise adding the calculated range deviation to the range value of each voxel within the current point cloud measured by the 3D sensor.

The step of applying the calculated deviation to correct for measurement drift for each 3D sensor may comprise applying the functional form describing the dependence of the sensor drift correction upon the Z-value of a voxel and the calculated range deviation to the Z-value of each voxel and the range deviation, and then adding the result to the Z-value of itself.

The step of applying the calculated deviation to correct for measurement drift for each 3D sensor may comprise applying the functional form describing the dependence of the sensor drift correction upon the Z-value of a voxel, the calculated range deviation for a given column, and the column number to the Z-value of each voxel, the range deviation for that voxel's column, and the column number of the voxel, and then adding the result to the Z-value itself.

The method may further include comparing the deviation of the current pose of the apparatus relative to the reference pose of the apparatus against the magnitudes that characterize the typical range of the intrinsic drift of the 3D sensor. The system may include means for signaling the user that the 3D sensor is out of position and means for preventing further measurement until the 3D sensor that is out of position is properly aligned by the user.

At least one embodiment of the invention may include one or more laser plane projectors configured to intersect a portion of the 3D sensor field of view with one or more projected laser planes.

The method may include the step of identifying the calibration set of voxels comprising the intersection between said laser projected planes and the 3D sensor field of view. A triangulation step for calculating the Z-values of the voxels in the calibration set using the known geometry of the projected laser planes may be provided. A computer workstation or compute device that receives point clouds from said 3D sensors may be included. The steps of calculating the deviation between the Z-values of the voxels in the calibration set, or one or more portions of the voxels in the calibration set, as reported by the 3D sensor and the Z-values of the voxels in the calibration set, or one or more portions of the voxels in the calibration set, as calculated by the triangulation method may be provided. A step of applying the calculated deviation to correct for measurement drift for each 3D sensor may be provided. The step of calculating the deviation between the Z-values of the voxels in the calibration set as reported by the 3D sensor and the Z-values of the voxels in the calibration set as calculated by the triangulation method may comprise calculating the first average Z-value of the voxels in the calibration set as reported by the 3D sensor, calculating the second average Z-value of the voxels in the calibration set as calculated by the triangulation method, and then subtracting the first from the second values.

The step of calculating the deviation between the Z-values of the voxels in one or more portions of the calibration set as reported by the 3D sensor and the Z-values of the voxels in one or more portions of the voxels in the calibration set as calculated by the triangulation method may comprise first averaging the Z-values of the voxels from each column of the calibration set as reported by the 3D sensor, second averaging the Z-values of the voxels from each column of the calibration set as reported by the triangulation method, then subtracting the first from the second value for each column individually.

The step of applying the calculated deviation to correct for measurement drift for each 3D sensor may comprise adding the calculated range deviation to the range value of each voxel within the current point cloud measured by the 3D sensor.

The step of applying the calculated deviation to correct for measurement drift for each 3D sensor may comprise applying the functional form describing the dependence of the sensor drift correction upon the Z-value of a voxel and the calculated range deviation to the Z-value of each voxel and the range deviation, and then adding the result to the Z-value of itself. The step of applying the calculated deviation to correct for measurement drift for each 3D sensor may comprise applying the functional form describing the dependence of the sensor drift correction upon the Z-value of a voxel, the calculated range deviation for a given column, and the column number to the Z-value of each voxel, the range deviation for that voxel's column, and the column number of the voxel, and then adding the result to the Z-value itself.

A step of comparing the deviation of the current pose of the apparatus relative to the reference pose of the apparatus against the magnitudes that characterize the typical range of the intrinsic drift of the 3D sensor may be provided. A means for signaling the user that the 3D sensor is out of position may be provided. A means for preventing further measurement until the 3D sensor that is out of position is properly aligned by the user may be provided.

APPENDIX

Method and Apparatus for Continuous calibration of 3D Sensors

REFERENCES CITED

U.S. PATENT DOCUMENTS

| 3,854 822 | 12/1974 | Altman |
| 4,753 569 | 6/1986 | Pryor |
| 5,131 754 | 7/1992 | Hasegawa |
| 5,715 166 | 2/1998 | Besl |
| 6,044 183 | 3/2000 | Pryor |
| 6,615 112 B1 | 8/2003 | Roos |
| 8,150 142 | 4/2012 | Freedman |

(continued)

| US 2001/0021898A1 | 9/2001 | Greer |

ABSTRACT

A method and apparatus are provided for continuous non-contact calibration of a single 3D sensor or a plurarity of 3D sensors. The calibration apparatus is continuously visible in the fields of view of all 3D sensors. Use of the apparatus improves the accuracy and repeatability of depth measurements. This improvement in accuracy and repeatability makes it possible to more accurately determine the position and orientation of a workpiece inside a work cell. The workpiece may be stationary or in motion. The work cell may be on an assembly line or a conveyor or may be a stationary test station. The invention has applications in open loop systems for non-contact dimensional gauging and pose estimation, and in closed loop applications for the accurate control of robotic arms. continuous calibration in real time ensures high measurement accuracy without sacrificing throughput of the work cell. The calibration apparatus and method can be used to ensure the accuracy of measurements using any of a variety of 3D sensor technologies. To reduce cost of implementation, the invention can be used with inexpensive, commercially available 3D sensors to correct measurement errors, image artefacts, and other measurement deviations from the true location and orientation of an object in 3D space.

OTHER PUBLICATIONS

Digital Image Processing, 3rd edition; Rafael C. Gonzalez & Richard E. Woods; published by Prentic Hall, 2008. ISBN 9780131687288

Numerical Recipes in C, 2nd edition; William H. Press, Saul Teukolsky, William T. Vetterling, Brian P. Flannery; published by Cambridge university Press, 1992. ISBN 0521431085

DRAWINGS

BRIEF DESCRIPTION OF THE FIGURES

Fig. 1 is the right-handed coordinate system XYZ of a 3D sensor with rotations RX, RY, and RZ about each axis;

Figs. 2A and 2B show an object in an initial pose and then the same object in a new pose after a z translation and an RY rotation;

Figs. 3A and 3B show an object in view of a 3D camera and the cloud of (X,Y,Z) points on the object surface visible to the 3D sensor;

Fig. 4 illustrates how the (X,Y,Z,RX,RY,RZ) pose of a rigid object is related to the pose of a portion of the object imaged by a 3D sensor;

Fig. 5 is a work cell that contains a plurality of 3D sensors, a computer workstation, a plurality of robot arms, and a workpiece that is an auto body shell;

Fig. 6 is a chart of the change in depth z, measured over time, for a commercial 3D sensor mounted rigidly in place and staring at a flat, matte surface a constant distance from the sensor and perpendicular to the sensor's optical axis;

Fig. 7 is a chart of the change in rotation RY, measured over time, for a commercial 3D sensor mounted rigidly in place and staring at a flat, matte surface a constant distance from the sensor and perpendicular to the sensor's optical axis;

Fig. 8 is a chart of the change in depth z and change in ambient temperature, measured over time, for a commercial 3D sensor mounted rigidly in place and staring at a flat, matte surface a constant distance from the sensor and perpendicular to the sensor's optical axis;

Figs. 9A and 9B show a portion of the surface of an auto body shell surface as it may appear to a 3D sensor when image artefacts are present, and the same portion of the surface of the auto body shell after image artefacts are removed;

Fig. 10 is an embodiment of the calibration apparatus;

Fig. 11 is the calibration apparatus and an arbitrary object at an initial pose in view of a plurality of 3D sensors;

Fig 12 is the calibration apparatus and an arbitrary object at a new pose in view of a plurality of 3D sensors;

Fig 13A and 13B and 13C show how z, RX, and RY can be determined from different poses of a flat plane;

Fig 14A and 14B and 14C show how X, ¥, and RZ can be determined from different orientations and positions of two fiducial marks;

Fig 15A and 15B are illustration of two sensors located a known distance apart so that RY of an object can be determined at different poses;

Fig 16 is an illustration of a work cell in which both the calibration apparatus and an auto body shell are in view of a plurality of 3D sensors;

Fig 17 is a depth image from a 3D sensor of the auto body shell and the calibration apparatus ;

Fig 18 is an image of computer display graphics that include a ring indicating the desired orientation of a 3D sensor, a smaller filled disc indicating the current orientation of the sensor relative to the target orientation, and an arrow point left and an arrow pointing up indicating that a technician should point the sensor upwards and left;

FIELD OF THE INVENTION

The present invention pertains to a method and apparatus and method for continuously calibrating a three-dimensional (3D) sensor or a plurality of 3D sensors, thereby maintaining accuracy of the sensors over time, especially when the 3D sensors are used in a system that determines the pose (position and orientation) of objects in 3D space.

BACKGROUND OF THE INVENTION

Three-dimensional (3D) sensors capture depth information from a scene. 3D sensor technologies based on the time of flight (TOF) principle, senors that derive depth from projected structured light such as the Microsoft Kinect (http://www.xbox.com/en-uS/Kinect), and other 3D sensors comprised of a matrix of depth-sensing elements can produce digital images at rates of 30 depth images per second or faster. The value at each (x,Y) pixel is a measurement of depth or distance from the camera. The depth image of the scene consists of points in 3D (X,Y,Z) space corresponding to the surfaces of objects in the scene visible to the 3D sensor.

In traditional two-dimensional (2D) image coordinates, the image origin (0,0) is located in the upper left corner of the image, the +X axis points to the right, and +Y axis points down. For a right-handed 3D coordinate system with a +Z axis mutually perpendicular to the +X and +Y axes, the +Z axis points away from the 3D sensor and into the scene (into the page) as shown in Fig. 1.

In practice it may be necessary to assign the positive and negative directions of each axis according to the conventions of a particular industry, application, or user. Although a move from the bottom of the image to the top is considered a -Y translation in image coordinates, if that same direction of motion corresponds to a motion in the scene upwards from a floor or upwards from the earth then the increase in height can be considered a translation in the +Y direction, whatever positive and negative directions are assigned to three mutually perpendicular axes to defined the 3D coordinate system, geometric figures such as points and lines and transformative operations such as translations and rotations in the 3D sensor coordinate system can be transformed to points and translations and rotations in a second coordinate system. Geometric figures and operations from that second coordinate system can be transformed to a third coordinate system, and so on. These mathematical coordinate transforms are familiar to practioners skilled in the mathematical arts and to practioners of the arts of robotics, image processing, and 3D measurement.

The pose of an object can be defined as position and orientation of an object in space relative to some initial position and orientation. The location of the object can be expressed in terms of x, Y, and z. The orientation of an object can be expressed in terms of its rotation about the x-axis (hereafter RX), rotation about the y-axis (hereafter RY) and rotation about the z-axis (hereafter RZ) relative to a starting orientation. Figs. 2A shows an object in a starting pose, and Fig. 2B shows the same object in a new pose after a z translation and RY rotation. Coordinates might be expressed in spherical coordinates rather than in Cartesian coordinates of three mutually perpendicular axes, and rotations may be expressed in terms of Euler angles rather than rotations about the x, Y, and z axes, but the six variables x, Y, z, RX, RY, RZ are sufficient to describe the pose of a rigid object in 3D space.

One goal of non-contact 3D sensing is to determine the 3D pose of a workpiece located in a work cell. Fig. 3A shows how a 3D sensor images of portion of the surface of a workpiece. The 3D sensor will produce a depth image consisting of (x,Y,Z) points corresponding to surface points of the workpiece visible to the sensor, as shown in Fig. 3B. The depth points correspond to the nearest surface of the workpiece to the sensor; interior points of the workpiece and points on the far side of the workpiece are not visible to the 3D sensor. A plurality of 3D sensors with non-overlapping or partially overlapping fields of view can be used in concert to acquire depth images of multiple portlons of the surface of the workpiece. The workstation computer or compute device that receives the depth images of the workpiece from the 3D sensors can determine the (X,Y,Z,RX,RY,RZ) pose of the workpiece. If a workpiece is assumed to be a rigid body, and if the spatial geometric relationship between a portion of the surface of the workpiece is known with respect to the centroid of the workpiece, then the pose of the workpiece can be estimated using pose information of the viewed portion of the surface, as shown in Fig. 4. The computer workstation or compute device can then transform the pose into the coordinate system of the robots.

Pose information is especially useful for automated manufacturing operations that rely on robot arms to perform assembly or inspection tasks in close proximity of a workpiece, unless appropriate sensors are attached to a robot arm, the robot will be unaware of the existence and pose of a workpiece inside the work cell; the robot arm simply moves to the positions commanded by the robot controller. Even if imaging and/or depth gauging sensors are affixed to the robot arm, these sensors may be configured for high precision close-up work, and the configuration of the sensors may be unsuitable to determine the pose of a workpiece, especially if the workpiece is an auto body shell or similarly large object. Even if the robot controller and the sensors mounted to the robot arms are capable of determining the pose of a workpiece, throughput of the work cell may be reduced if the robot controller and its robot arms are responsible both for pose determination and operations that rely on the pose information. The pose information for the workpiece may be determined by other devices or mechanisms in the work cell, and these other devices and mechanisms can pass the pose information to the robot controller and the robot arms.

The robots may receive positional information for the workpiece from an optomechanical encoder attached to the mechanical conveyor that pushes or pulls the workpiece through the work cell. The optomechanical encoder provides positional information for only one degree of freedom of the workpiece, specifically the translation of the workpiece in one direction through the work cell. Additional sensors such as proximity switches, triangulation depth sensors, contact sensors, photoelectric eyes, 2D image sensors, and/or other sensors may be used to estimate the pose of the workpiece in the work cell. These sensors may suffer from limited accuracy, slow operation, limited range of depth measurement, poor suitability for pose estimation, and other problems. For example, the conveyor which pulls an auto body shell through a work cell can move in a jerky motion, and the auto body shell can rock and twist in several degrees of freedom relative to the conveyor. The optomechanical encoder attached to the conveyor measures the position of the encoder itself, and as a measure of the pose of the auto body shell the conveyor position can prove an inaccurate measure. The conveyor position could be used together with proximity switches and other sensors as described above, but it can be complicated to coordinate and process the data from such a hodge-podge sensorium. The accuracy of the pose estimation suffers if the pose is determined using information from an optomechanical encoder and related sensors. Significant labor may be required to install and maintain the sensors and the computer hardware and software that monitors them. Ideally, the pose of a workpiece would be determined continuously, accurately, and precisely by a system comprised of non-contact depth sensors that can measure depth in a large work envelope. This ideal system would require little maintenance, and what little maintenance is necessary would be easy to accomplish, would typically completed in a short period of time, and would require little specialized knowledge.

These requirements for accuracy, ease of use, and ease of maintenance can be met by a system comprised of an appropriately programmed computer workstation, a plurality of 3D sensors that produce depth images for work envelopes measuring several meters on a side, and the method and apparatus of the present invention. The method and apparatus herein described can be used to improve the long-term accuracy of inexpensive, commercially available 3D sensors. Cost of implementation and maintenance of the system are reduced further since the calibration apparatus is simple and relatively inexpensive, and maintenance of the system is quick and requires little specialized knowledge.

Fig. 5 is an illustration of a work cell with 3D sensors, a computer workstation, a robot controller, robot arms, and a workpiece that is an auto body shell. During the manufacturing process the auto body shell is conveyed into the work cell by mechanical means such as a chain pull or conveyor. The 3D sensors capture depth data from the auto body shell at a rate of 30 depth images per second. The computer workstation processes the depth images and calculates the pose of the auto body shell in real time. The workstation transforms the estimated (X,Y,Z,RX,RY,RZ) pose of the auto body shell into the coordinate system of the robots and passes the transformed pose data to the robot controller. The robot controller then directs each robot arm to move into the work cell along a path through space so that the robot and its affixed tooling can approach very close to the auto body shell without collision, once the robot and its tooling are located in close proximity of the target region of the auto body shell, the robot can perform the desired manufacturing operations.

If the pose of an auto body shell in a work cell can be determined with sufficient accuracy, and if updates of the estimated pose can be passed to the robot controller in real time, then suitably programmed robots can perform their tasks while the auto body shell is in motion, and it becomes unnecessary to stop the conveyor and halt the motion of the auto body shell through the work cell. Whether the auto body shell is stationary or in motion, assembly processes and industry requirements bespeak the need for high measurement accuracy, and the method and apparatus of the present invention ensure this accuracy can be achieved even with inexpensive 3D sensors.

Expensive, industrial grade 3D sensors may be more accurate and more robust than inexpensive commercial grade 3D sensors such as the Microsoft Kinect. However, no matter how accurate a 3D sensor may be at the time of its most recent calibration, gravitational pull or vibration or an unintentional bump can cause a sensor to slip, twist, or droop so that the sensor points in a slightly different direction than is intended. In a manufacturing environment, a 3D sensor will be subject to numerous disturbances such as vibration, changes in temperature, changes in ambient lighting conditions, and unintentional bumps that can cause persistent or temporary misalignment. A change in ambient temperature can cause expansion or contraction of components that distort the optical path of the 3D sensor, and this distortion will contribute to measurement error.

If a 3D sensor is misaligned, then the misalignment will cause unexpected deviations in one or more of the six degrees of freedom (X,Y,Z,R×,RY,RZ), and these deviations will adversely affect the accuracy of measurement of the pose of a workpiece. This change of sensor orientation may be imperceptible to the human eye. In the prior art, fixing the alignment of a sensor and recalibrating the 3D sensor may require devices and special fixtures that require consider labor to install and employ (see us 2001/0021898 A1). Periodic calibration and realignment of the sensor can correct misalignment, but inaccuracy of measurement may not be detected until the calibration is performed. If calibration reveals that the sensor's measurement accuracy is no longer within an acceptable range, it may be difficult or even impossible to determine the time at which the misalignment occurred, or whether the magnitude of measurement error has been constant over time.

Inexpensive commercial 3D sensors may be difficult to recalibrate to ensure long-term accuracy. For a sensor such as the Microsoft Kinect there may be no readily apparent means to recalibrate the sensor and save the new calibration in the sensor firmware. It is simple to demonstrate that the Kinect is subject to several types of measurement error even when the sensor remains rigidly mounted in place. Measurement errors can be observed by mounting the Kinect and orienting it so that it images a matte, flat surface perpendicular to the optical axis of the Kinect. Measurement errors can be observed by calculating the best fit plane for the depth data corresponding to the flat target surface, and then tracking the change in the orientation of the plane over time. A planar fit to the depth data can be calculated following any of several methods familiar to practitioners of the art, one example being a least squares fit of (X,Y,Z) points to a plane.

In the first few minutes after the Kinect is initialized, the measured z depth from the sensor will change by several millimeters, as shown in the chart of Fig. 6. During the same period the measured RY of the fit plane will also change as shown in Fig. 7. These and similar measurement changes over time for a fixed planar target can be called measurement drift. After these first few minutes the z and RY measurements of the (X,Y,Z,RX, RY,RZ) pose estimation of the target surface will stabilize, though tests lasting hours or days reveal that depth z and rotation RY continue to drift. Some of the measurement drift may be explained by a sensitivity of the Kinect to changes in ambient temperature. As is evident from the chart of Fig. 8, some of the drift in depth z can be attributed to changes in ambient temperature since the z measurement tends to be stable when ambient temperature is stable, and the z measurement tends to drift when ambient temperature changes.

It is also known, and empirical tests quickly confirm, that random measurement error for Kinect depth data is proportional to the square of the distance from the sensor to the target. Random measurement error or random noise can be measured as fluctuations in depth values for a target in a static scene. For an object located one to two meters distant from the Kinect, the random noise of depth measurement may be five millimeters, but for an object xix meters or farther from the Kinect the random noise of depth measurement can be 100 millimeters or more.

Image artefacts can appear in the depth images from a Kinect. Even to an untrained observer these artefacts are readily identifiable as vertical lines that span the full height of the image and distort the appearance of objects in the scene. Fig. 9A shows a portion of an auto body shell as it appears in a depth image when vertical image artefacts are present, and Fig. 9B shows the same portion of auto body shell when the artefacts are absent. The number and position of these artefacts can change from one depth image to the next, and although the rate of change may slow after the first few minutes of operation, the number and position of the vertical lines may change unpredictably even thereafter. Examination of the depth data reveals that the vertical line visible to the naked eye is the result of a stepwise change in depth values from one column to a neighboring column. Depth measurements in one column will be consistently lower than the depth measurements of the neighboring column. The artefacts appear as straight vertical lines even if objects or surfaces at different depths straddle affected columns, since the vertical image artefacts affect the depth measurements for objects in the scene, these image artefacts are considered sources of error alongside the measurement drift during startup and the sensitivity to ambient temperature.

Although relatively inexpensive 3D sensors such as the Kinect may have acceptable short-term measurement repeatability on the order of a millimeter, it is obvious to a practioner skilled in the art of non-contact dimensional gauging that measurement drift over time and the presence of image artefacts pose problems for measurement applications that demand high accuracy. Either these low cost sensors must be accepted as inaccurate and thus useful for only the least demanding applications, or the sensors must be set aside in favor of 3D measurement devices that are more accurate but also more expensive, more complicated to operate, less readily available, and more difficult to maintain. An application to estimate the pose of an auto body shell can require an accuracy of 10 millimeters or even 5 milimeters. It is an aim of the present invention to achieve this accuracy of pose measurement using inexpensive 3D sensors such as the Kinect.

Full disclosure of the present invention will make it obvious how continuous calibration using the method and apparatus described herein makes it possible to achieve long-term depth measurement accuracy for 3D sensors, including inexpensive sensors such as the Microsoft Kinect. whereas measurements of the pose of a planar object made without the benefit of the present invention may drift ten millimeters or more in depth z and one or more degrees in rotation in RY, when the method and apparatus of the present invention are employed, measurements of the pose of a planar object may be repeatable to within one millimeter in z and tenths of a degree in RY. The method and apparatus provide for the means to correct measurement error for all six degrees of freedom (X,Y,Z,RX,RY,RZ).

SUMMARY OF THE INVENTION

It is the aim of the present invention to address disadvantages of prior art, and in particular to improve accuracy, reduce the cost of implementation, and simplify the use and maintenance of a system of one 3D sensor or a plurality of 3D sensors. In keeping with these goals and other goals which will become apparent in the description of the embodiment of the present invention, the inventive characteristics of the method and apparatus include a simple manufacturing process for the calibration apparatus, a means to correct depth images from inexpensive 3D sensors and hence improve the accuracy of the sensors, and a method that provides continuous feedback to a technician so that sensors can be realigned quickly and easily.

Embodiments of the present invention allow calibration to take place continuously. The depth images output by one or more 3D sensors are corrected in real time, and the correction can be carried on indefinitely, ensuring accuracy. The calibration apparatus remains fixed in place within the work cell and is visible at all times to all 3D sensors. The continuous presence of the calibration apparatus in the fields of view of all 3D sensors makes it possible to correction depth information on the fly for all six degrees of freedom (X,Y,Z,RX,RY,RZ), and also obviates the need to move a calibration apparatus into and out of the work envelope for periodic calibration, as is common in prior art. The apparatus and method make it possible to correct distortions such as image artefacts.

In the preferred embodiment, the calibration apparatus is a rigid bar with fiducial features. The apparatus is long enough to span the fields of view of all 3D sensors, and the portion of the apparatus visible to each sensor typically occupying a small portion of the depth image. In each depth image the apparatus may occupy a number of rows at the bottom of the image, the total height of these rows being approximately one tenth to one fourth of the height of the depth image.

The flat planar surface and fiducials of the calibration apparatus are a constant presence in each depth image, upon installation of the calibration apparatus and 3D sensors, reference depth data is saved for each 3D sensor. The reference depth data are measurements of the portion of the calibration apparatus visible to each 3D sensor, including the best fit plane for the flat surface and the locations of the fiducials. The flat plane and fiducials of the calibration apparatus can be detected using image processing methods, or more simply the computer workstation can scan the bottommost rows of the image in which the calibration apparatus is expected to appear. A planar fit to the data for the flat surface of the calibration apparatus provides reference values for z, RX, and RY as illustrated in Figs. 13A, 13B, and 13C. Location and measurement of the two fiducial features on the calibration apparatus in view of each 3D sensor yield reference values for X, Y, and RZ as illustrated in Figs. 14A, 14B, and 14C. These six values are saved as reference values which we can call refX, refY, refz, refRx, refRY, and refRz.

The calibration apparatus occupies a portion of the depth image during normal measurement operation when a workpiece is in view of one 3D sensor or a plurality of 3D sensors. For each 3D sensor, current values of (X, Y,Z,RX,RY,RZ) for the portion of the calibration apparatus visible to the sensor can be determined following the method described above for determining initial reference values. For each 3D sensor the current values for the calibration apparatus can called curX, curY, curz, curRX, CURRY, and curRZ.

For each 3D sensor the computer workstation can calculate deviations for each of the six degrees of freedom (X,Y,Z,RX,RY,RZ]. Given the six reference values for the calibration apparatus and the six current values for the calibration apparatus, the deviations for the six values can be determined for each 3D sensor as follows:

$$dx = curx - ref\times$$

$$dY = curY - refY$$

$$dz = curz - refz$$

$$dRX = curRX - refRx$$

$$dRY = curRY - refRY$$

$$dRZ = CUrRZ - refRz$$

The computer workstation analyzes the current depth image to determine the pose of the portion of the workpiece visible to each 3D sensor. The workpiece occupies some or all of the pixels of the depth image not occupied by the calibration apparatus. once the workpiece pose (wx, wY,wz, wRX,wRY,wRZ) is calculated, the corrected pose (wx*, wY*, wz*, wRX*, wRY*, wRZ*) is corrected using the deviations (dx, dY, dz, dRX, dRY, dRZ):

$$wX^* = wX - dx$$

$$wY^* = wY - dY$$

$$wz^* = wZ - dz$$

$$wX^* = wRX - dRX$$

$$wRY^* = wRY - dRY$$

$$wRZ^* = wRZ - dRZ$$

If required, the corrected pose (wx*, wY*, wz*, wRX*, wRY*, wRZ*) may then be transformed to other coordinate systems such as robot coordinate systems.
The calibration apparatus can be used to correct image artefacts that cause localized distortions in depth measurements. The vertical image artefacts in depth images from the Microsoft Kinect span the full height of the image, so these artefacts are visible in the bottom rows of the image in which the calibration apparatus is visible, when the reference values for the calibration apparatus are saved, the reference image can be saved as well. The depth values for all (X,Y) pixels corresponding to the calibration apparatus in the current image can be subtracted from the matching (x,Y) pixels in the reference image. The depth difference at each (x, Y) pixel represents a deviation of the current depth measurements for calibration apparatus from the reference depth measurements of the calibration apparatus.
Within the region of the image in which the calibration apparatus is visible, the average depth and average deviation are determined for each column of pixels. Pixels of invalid depth value in either the current image or the reference image are excluded from the calculations of averages; typically zero values indicate pixels for which no depth measurement could be made. Once the average depth and average deviation are known, corrections can be applied to the image, corrections for each pixel (x,Y) within the column x are proportional to depth. At a distance three times as far from the camera as the calibration apparatus, a correction equivalent to three times the deviation is applied.
In one preferred embodiment, the rotation RY can be calculated precisely for a workpiece such as an auto body shell that is visible in the fields of view of two 3D sensors. The two 3D sensors are located 1 meter apart or at some other known distance apart. As shown in Figs. 15A and 15B, the rotation RY can be calculated using depth information from each camera and the known distance separating the two cameras. Depth information for each 3D sensor can be corrected as described above.
The calibration apparatus can be used for realignment of the sensors. If the the magnitude for more or more of the deviations (dx,dY,dz,dRx,dRY,dRz) falls outside an acceptable range, then the computer workstation can indicate that sensor alignment is required. A technician first checks rough alignment using simple measurement tools. The sensor body height can be measured using a common linear ruler or meter stick so that the height falls within the desired range. The horizontal alignment of the sensor can be measured using a spirit level, other adjustments can be made according to the technician's judgment using the unaided eye. Next, the technician uses the system's computer workstation or a device connected to the computer workstation to a realignment mode with visual feedback on a computer monitor. In this realignment mode the system determines the planar fit and fiducial locations as described above. The deviation from the desired sensor orientation is presented on a computer display as graphics including a target circle, a smaller circle or filled disk representing the current sensor orientation, and one or two arrows indicating the direction in which the sensor should be pointed to bring it into proper alignment. An illustration of the graphics displayed to aid realignment are shown in Fig. 18. The diameter of the target circle is sized so that the smaller disk representing the current sensor orientation can fit fully within it. The difference in diameters of the target circle and the smaller disk represents the misalignment tolerance. The larger the target circle relative to the smaller disk, the greater tolerance there is for deviation from the ideal alignment.

Once the sensor is aligned to within tolerance so that the smaller disk fits fully within the target circle, the technician causes the system to exit realignment mode. When realignment mode is exited, reference data is saved for all six degrees of freedom: refx, refY, refz, refRx, refRY, and refRz. These reference values are used to determine measurement deviations as described above.

Unlike depth measurement systems that rely on robotic arms or mechanical movements to place 3D sensors such as scanning triangulation sensors in proximity to a workpiece, the preferred embodiment of the invention does not have moving parts that can compromise the safety of workers who may occupy the work cell. The 3D sensors, calibration apparatus, and computer work station are stationary fixtures in the work cell.

An object that occludes the workpiece can also occlude the 3D sensor's view of the calibration apparatus, occlusion of the calibration apparatus can be readily detected since continuous calibration according to the method of the present invention relies on determination of a plane fit to the calibration apparatus and detection of the fiducial features, and both planar fit and fiducial detection are sensitive to the change in depth that would occur in the region of an occluding object.

Testing reveals that employment of a single calibration apparatus for all 3D sensors is sufficient to correct for drift in z, RY, and other degrees of freedom. A single calibration apparatus suffices if measurement drift can be corrected using transforms for rigid body transformation. If the depth measurements from a 3D sensor are subject to a compression or stretch in z depth or in some other dimension, then a rigid body transform is not sufficient to correct for this compression or stretch. In this case a second calibration apparatus can be mounted such that it, too, is visible to all 3D sensors. The first and second apparatus would be affixed at difference standoff distances from the 3D sensors.

The invention will be described with reference to a specific embodiment illustrated in the appended figures, but it is to be understood that the drawings of the preferred embodiment are intended as a description only, and that the specifics of the drawings and the specifics of the embodiment are not intended as limitations. Similarly, the application to estimate the pose of an auto body shell is presented as an exemplary application, but the calibration apparatus and method can be applied to other workpieces and applications.

## DESCRIPTION OF THE PREFERRED EMBODIMENTS

The calibration apparatus is manufactured so that it possesses a flat planar surface long enough to span the fields of view of all 3D sensors. The 3D sensors are aligned so that the optical axis of each sensor is perpendicular to the flat surface of the calibration apparatus. The surface finish of the calibration apparatus appears matte under visible and near-infrared light, ensuring that enough radiation emitted by 3D sensors is reflected back that there is sufficient signal to yield a valid depth measurement. The surface of the calibration apparatus may be tooled or otherwise ground roughly to ensure that the surface remains matte. A thin layer of rust may form on a calibration apparatus manufactured from ferrous metal, but surface rust need not be removed since the presence of natural rust can help ensure that the surface retains a slightly rough, matte finish.

Fig. 10 shows a typical embodiment of the apparatus as a long straight L-shaped steel bar with a pair of fiducial markings visible to each 3D sensor. The bar is approximately 10 millimeters thick or whatever thickness is appropriate to ensure that the bar remains rigid and straight and unlikely to be bent or moved by ordinary bumps in a factory environment. Although the calibration apparatus may be mounted to special brackets, and these brackets affixed to rigid structures within the work cell, the single piece L-shaped configuration for the calibration apparatus is simple to manufacture, and the bottom surface affords a choice of method to affix the appratus to the work cell. The calibration apparatus can be welded, bolted, or otherwise affixed permanently and unmovably to the floor or to load-bearing, rigid structures within a work cell. The calibration is affixed so that gravitational pull, minor collisions, and forces applied to any portion of the surface do not cause the apparatus to move, twist, or distort from its desired shape.

The calibration apparatus sports a pair of fiducials for each 3D sensor. In the preferred embodiment as shown in Fig. 10, the fiducials are circular holes drilled through the flat surface of the apparatus that faces the 3D sensors. Holes 25 millimeters in diameter are drilled at a center-to-center separation of 100 millimeters. The size and separation of the fiducials are selected to fit the field of view of each 3D sensor according to the requirements of the application.

For an application that involves an auto body shell or similarly large workpiece, the calibration apparatus may be four meters in length or longer and span the fields of view or two or more 3D sensors as illustrated in Fig. 16. For applications that involve smaller workpieces that measure no longer than a meter in any dimension, a single 3D sensor and a calibration apparatus one meter long may be sufficient.

The computer workstation that receives depth images from each 3D sensor calculates the deviations (dx,dY,dz,dRx,dRY,dRz) independently for each 3D sensor. Although the invention might be embodied such that one computer workstation is dedicated to each 3D sensor, or so that a mobile compute device is connected to the 3D sensors and performs operations on the depth images, in the preferred embodiment a single computer workstation receives the data from a plurality of 3D sensors, and this single computer workstation calculates the six deviations for each 3D sensor and applies corrections to the data from all 3D sensors before passing the workpiece pose to a robot controller or to some other computer.

The fiducial bar has a pair of fiducials for the field of view of each 3D sensor. In the preferred embodiment the fiducials are circular holes. The fiducials may be manufacturing as through holes, countersunk holes, pegs, or other features that are detectable using depth data. As required, the pair of fiducials in view of each 3D sensor may have a different configuration than all other fiducial pairs in the apparatus. For example, the fiducials for the first 3D sensor may be a pair of square holes, the fiducials for the second 3d sensor may be a pair of circular pegs, and so on. In the preferred embodiment, all fiducials are holes drilled completely through the flat plate that faces all the 3D sensors, all holes have the same diameter, holes are centered vertically on the center line of the flat plate, and the centers of each pair of holes are the same distance apart.

In the preferred embodiment, the apparatus spans the fields of view of all sensors, although for applications that do not require a single, long calibration apparatus it would be sufficient if each 3D sensor were paired with its own fixed calibration apparatus of the same design but smaller size. A system with four 3D sensors could have a total of four calibration devices, each of which has two fiducial holes.

Although the preferred embodiment relies on inexpensive 3D sensors, including the Microsoft Kinect, the calibration apparatus and method could be used with any 3D sensors that produce depth images or that can make depth measurements at multiple points in a scene.

Aside from the embodiments of the invention that have been described, it is obvious that many additional embodiments could be created via modification or adaptation without departing from the spirit of the present invention or the scope of the following claims. The present invention is so completely revealed and additional advantages so obvious to others skilled in the arts of machine vision, 3D non-contact depth sensors, robot calibration, or related fields could adapt the invention for a variety of applications.

Examples of the present disclosure are set out in the following list of numbered items.

1. A method and apparatus to continuously calibrate one 3D sensor or a plurality of 3D sensors, comprising the following:

an apparatus of known geometric shape continually in view of all 3D sensors in the system;

fiducial features in the apparatus visible to each 3D sensor to allow for correction in six degrees of freedom--x, Y, z, RX, RY, RZ;
a computer workstation or compute device that receives depth images from a 3D sensor or a plurality of 3D sensors;
a method of calculating and saving the pose of the apparatus for each 3D sensor;
a method of calculating the deviation of the current measured pose of the apparatus relative to the reference pose of the apparatus;
a method applying the calculated deviation to correct the measure the pose of a workpiece;
a method of correcting image artefacts;
a method of aligning the sensor;

2. The apparatus of item 1, wherein a portion of the apparatus is always in view of each 3D sensor;

3. The apparatus of item 1, wherein the apparatus is a rigid device long enough to span the fields of view of all 3D sensors;

4. The apparatus of item 1, wherein the portion of the apparatus in view of each 3D sensor is a flat planar surface;

5. The apparatus of item 1, wherein the flat planar surface of the apparatus has two fiducials or distinct features within the field of view of each 3D sensor, these two fiducials being detectable using depth information;

6. The method and apparatus of item 1, wherein the pose values z, RX, and RY of the apparatus are determined for each 3D sensor by calculating a planar fit of the depth data to the flat portion of the apparatus in view of the 3D sensor;

7. The method and apparatus of item 1, wherein pose values x, Y, and RZ of the apparatus are determined for each 3D sensor by calculating the relative positions and of the two fiducials described in item 2 that are visible to the 3D sensor;

8. The method and apparatus of items 1, 6, and 7, wherein reference values for (X,Y,Z,RX,RY,RZ) are determined for the calibration apparatus;

9. The method and apparatus of item 1, 6, and 7, wherein current values for (X,Y,Z,RX,RY,RZ) are determined for the calibration apparatus;

10. The method and apparatus of items 1, 6, 7, 8, and 9, wherein the deviations (dx,dY,dz,dRx,dRY, dRz) are determined as the difference of the six reference values and six current values for the calibration apparatus;

11. The method of item 10, wherein the deviations are used to correct the measured pose of a workpiece;

12. The method of item 11, wherein the workpiece is an auto body shell;

13. The method and apparatus of items 1 and 10, wherein the corrected pose is transformed to the coordinate system of a robot controller and a plurarity of robot arms and passed to the robot controller;

14. The apparatus of items 1 and 5, wherein each fiducial is a hole drilled completely through the flat planar surface of the calibration apparatus that faces each of the 3D sensors;

15. The apparatus of items 1 and 5, wherein each fiducial may be a peg, a countersunk hole that does not penetrate completely through the calibration apparatus, or some other shape detectable using depth information;

16. The method and apparatus of item 1, wherein image artefacts and other deviations are corrected by applying a correction proportional to depth;

17. The method of item 16, wherein the correction is determined for each column by measuring the average depth of the calibration apparatus within each column x and the average deviation of the depth values in column $\times$ in an image from the depth values in column x for a reference image;

18. The apparatus of item 1, wherein a plurality of calibration apparatus can be present in the fields of view of the 3D sensors to correct for measurement errors such as proportional depth errors that cannot be corrected with a single calibration apparatus;

19. The method and apparatus of item 1, wherein the current alignment of the sensor relative to the target alignment can be represented as graphics on a computer display;

20. The method of item 19, wherein the graphics include a target circle representing the desired orientation, a smaller circle or filled disk representing the current sensor orientation, and arrows indicating the direction in which the sensor must be pointed to achieve the desired orientation;

21. The method of items 20 and 21, wherein the diameter of the target circle has a magnitude representing the misalignment tolerance for the sensor orientation.

22. A 3-D imaging and processing system for imaging at least one 3-D object at an imaging station, each object being illuminated with a projected beam of radiation, the system comprising:

    at least one 3-D or depth sensor located at the imaging station, each sensor having a field of view so that each object is in each field of view, each sensor including a set of radiation sensing elements which detect radiation of the projected beam which is reflected from the surface of each object at the imaging station to obtain image data including depth measurements of a set of points in 3-D space corresponding to surface points of each object; and

    at least one processor to process the depth measurements in real-time to obtain current depth calibration data and to process the image data and the current depth calibration data to obtain a real-time calibrated image.

23. The system of item 22, wherein the at least one object includes at least one calibration object, each calibration object having a fixed size and shape and supported in the field of view of each sensor, wherein a subset of the radiation sensing elements detects radiation reflected from each calibration object and wherein the depth measurements include depth measurements of a subset of points corresponding to surface points of each calibration object.

24. The system of item 23, wherein each calibration object includes a plurality of spaced-apart optical fiducials illuminated with the projected beam, each of the optical fiducials having a precisely known location relative to each other optical fiducial.

25. The system according to any preceding item, wherein each of the optical fiducials has an optically detectable shape.

A method and apparatus are provided for continuous non-contact calibration of a single 3D sensor or a plurality of 3D sensors. The calibration apparatus is continuously visible in the fields of view of all 3D sensors. Use of the apparatus improves the accuracy and reliability of depth measurements. The calibration apparatus and method can be used to ensure the accuracy of measurements using any of a variety of 3D sensor technologies. To reduce cost of implementation, the invention can be used with inexpensive, consumer-grade 3D sensors to correct measurement errors and other measurement deviations from the true location and orientation of an object in 3D space.

END OF APPENDIX

While exemplary embodiments are described above, it is not intended that these embodiments describe all possible forms of the invention. Rather, the words used in the specification are words of description rather than limitation, and it is understood that various changes may be made without departing from the spirit and scope of the invention. Additionally, the features of various implementing embodiments may be combined to form further embodiments of the invention.

**Claims**

1. A 3-D imaging and processing method including at least one 3-D or depth sensor which is continuously calibrated during use, the method comprising:

   supporting at least one 3-D object to be imaged at an imaging station;
   projecting a beam of radiation at a surface of each supported object;
   supporting at least one 3-D or depth sensor at the imaging station, each sensor having a field of view so that each object is in each field of view, each sensor including a set of radiation sensing elements which detect radiation of the projected beam which is reflected from the surface of each object at the imaging station to obtain image data including depth measurements of a set of points in 3-D space corresponding to surface points of each object; and
   processing the depth measurements in real-time to obtain current depth calibration data and processing the image data and the current depth calibration data to obtain a real-time calibrated image.

2. The method as claimed in claim 1, wherein the at least one object includes a calibration object having a fixed size and shape and supported in the field of view of each sensor, wherein a subset of the radiation sensing elements detects radiation reflected from the calibration object and wherein the depth measurements include depth measurements of a subset of points corresponding to surface points of the calibration object.

3. The method as claimed in claim 1, further comprising storing sensor calibration data and wherein the step of processing includes the step of calculating a difference between the current depth calibration data and the stored sensor calibration data to obtain at least one deviation.

4. The method as claimed in claim 3, wherein six deviations are calculated.

5. The method as claimed in claim 3, wherein the step of processing processes the depth measurements and the at least one deviation to obtain a corrected pose of the at least one object at the imaging station.

6. The method as claimed in claim 5, wherein the corrected pose is in a first coordinate system and wherein the method includes transforming the corrected pose to a second coordinate system different from the first coordinate system.

7. The method as claimed in claim 1, wherein the radiation includes coherent light.

8. A 3-D imaging and processing system for imaging at least one 3-D object at an imaging station, each object being illuminated with a projected beam of radiation, the system comprising:

   at least one 3-D or depth sensor located at the imaging station, each sensor having a field of view so that each object is in each field of view, each sensor including a set of radiation sensing elements which detect radiation of the projected beam which is reflected from the surface of each object at the imaging station to obtain image data including depth measurements of a set of points in 3-D space corresponding to surface points of each object; and
   at least one processor to process the depth measurements in real-time to obtain current depth calibration data and to process the image data and the current depth calibration data to obtain a real-time calibrated image.

9. The system as claimed in claim 8, wherein the at least one object includes at least one calibration object, each calibration object having a fixed size and shape and supported in the field of view of each sensor, wherein a subset of the radiation sensing elements detects radiation reflected from each calibration object and wherein the depth measurements include depth measurements of a subset of points corresponding to surface points of each calibration object.

10. The system as claimed in claim 8, further comprising an electronic storage device to store sensor calibration data and wherein the at least one processor calculates a difference between the current depth calibration data and the stored sensor calibration data to obtain at least one deviation.

11. The system as claimed in claim 10, wherein the at least one processor processes the depth measurements and the at least one deviation to obtain a corrected pose.

12. The system as claimed in claim 8, wherein the radiation includes coherent light.

**13.** The system as claimed in claim 8, further comprising a projector to project the beam of radiation.

**14.** The system as claimed in claim 13, wherein the projector is a laser plane projector which includes a coherent light source.

**15.** The system as claimed in claim 9, wherein each calibration object includes a plurality of spaced-apart optical fiducials illuminated with the projected beam, each of the optical fiducials having a precisely known location relative to each other optical fiducial.

RZ

Z

RX

X

RY

Y

## FIG. 1

FIG. 2B

_12_

## FIG. 2A

FIG. 3A

FIG. 3B

FIG. 4

FIG. 5A

FIG. 5B

FIG. 5C

FIG. 6A

FIG. 6B

FIG. 6C

EP 2 672 715 A2

FIG. 7

FIG. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 61689486 B
- US 4131919 A
- US 4085456 A
- US 3971065 A
- US 4195221 A
- US 5081530 A
- US 6751344 B
- US 4682894 A
- US 20010021898 A1
- US 6615112 B

- US 3854822 A
- US 4753569 A
- US 5131754 A
- US 5715166 A
- US 6044183 A
- US 8150142 B
- US 8400494 B
- US 6615112 B1
- WO 8150142 A

**Non-patent literature cited in the description**

- **RAFAEL C. GONZALEZ ; RICHARD E. WOODS.** Digital Image Processing. Prentic Hall, 2008

- **WILLIAM H. PRESS ; SAUL TEUKOLSKY ; WILLIAM T. VETTERLING ; BRIAN P. FLANNERY.** Numerical Recipes in C. Cambridge university Press, 1992